(19) Europäisches Patentamt

European Patent Office

Office européen des brevets

(11) EP 1 591 562 A2

(12) **DEMANDE DE BREVET EUROPEEN**

(43) Date de publication:
02.11.2005 Bulletin 2005/44

(51) Int Cl.7: **C23F 13/06**, C23F 13/16, C23F 13/20

(21) Numéro de dépôt: 05290797.9

(22) Date de dépôt: 11.04.2005

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **28.04.2004 FR 0404605**

(71) Demandeur: **Institut Français du Pétrole**
**92852 Rueil Malmaison Cédex (FR)**

(72) Inventeurs:
• **Sauvant-Moynot, Valérie**
**69006 Lyon (FR)**
• **Duval, Sébastien**
**53600 Evron (FR)**
• **Gonzalez, Serge**
**69150 Decines (FR)**
• **Vallet, Jacques**
**69008 Lyon (FR)**
• **Grenier, Jacky**
**38890 Vignieu (FR)**

(54) **Structure et revêtement auto-réparables pour milieu corrosif**

(57) L'invention se rapporte à une structure comprenant au moins une surface métallique (3) soumise à une protection cathodique et un revêtement protecteur (1) de ladite surface, ledit revêtement comprenant un polymère incluant des micro-capsules (2) contenant des composés sensibles au champ électrique généré par la protection cathodique et susceptibles de réagir en milieu alcalin pour former une couche protectrice sur la surface de la structure lorsque celle-ci est directement en contact avec un milieu corrosif.

L'invention concerne également le revêtement associé à ladite structure.

FIG. 1

EP 1 591 562 A2

## Description

La présente invention concerne le domaine des structures comprenant une surface métallique protégée de la corrosion par une protection cathodique.

On connaît des matériaux auto-réparables inspirés des systèmes vivants, où un endommagement mineur engendre une réponse automatique d'auto-réparation (fêlure, coupure, etc...).

Un système intelligent basé sur des principes similaires serait très intéressant pour les structures incluant un revêtement organique, dans lesquelles une fissuration ou une délamination dudit revêtement pourrait être au moins en partie réparée ou dont les effets pourraient être réduits sans intervention manuelle. On peut penser qu'un tel revêtement ayant une capacité d'auto-réparation conférera à la structure protégée une durée de vie sensiblement accrue.

Il existe deux grands concepts de matériaux auto-réparables. Le premier consiste en la fermeture de la fissure, le second en la complétion de celle-ci.

Dans le cas de la fermeture de fissure, les deux faces sont rapprochées de façon à entraîner la suppression de la concentration de contraintes en fond de fissure : sans cette concentration de contraintes, la fissure ne peut pas se propager. Le rapprochement des deux faces peut être réalisé par des matériaux à mémoire de forme (alliage métallique ou polymère).

Dans le cas de la complétion de la fissure, la fissure est remplie par un agent de réparation. Celui-ci est un polymère réticulable, généralement de même nature que le revêtement, qui formera une liaison chimique entre les deux faces de la fissure. Il peut également s'agir d'un solvant, préférentiellement pour les thermoplastiques, qui va provoquer la diffusion des chaînes du polymère de part en part de la fissure (dans ce cas il n'y pas de réticulation/collage entre les deux faces).

Dans le cadre des matériaux auto-réparables utilisant un agent de réparation, trois points sont cruciaux pour la mise en oeuvre de ceux-ci :

- le stockage de l'agent de réparation,
- le transport de cet agent à la fissure et
- le déclenchement de l'action de réparation.

Dans les exemples de la littérature, les agents de réparation sont stockés dans des sphères creuses ou micro-capsules au sein du polymère et permettent en cas de fissuration la réparation du polymère.

Par exemple le brevet US-A-6 518 330 décrit un polymère comprenant des inclusions de micro-capsules ou sphères creuses remplies d'un agent polymérisable et de particules de catalyseur pour la réaction de polymérisation.

Selon un autre exemple semblable au précédent, la demande US-A-2004/0007784 décrit un polymère dans lequel les particules de catalyseurs sont liées à la surface des micro-capsules contenant l'agent polymérisable.

Pour ces systèmes de stockage, la réaction de réparation est engendrée par le champ de contraintes au niveau de la fissure. Celui-ci provoque la rupture des sphères creuses. L'agent de réparation est alors transporté jusque dans la fissure par les forces capillaires et polymérise sous l'effet du catalyseur, bouchant ainsi la fissure.

Au final, il s'avère nécessaire dans le cas de ces matériaux auto-réparables de disposer in situ d'un agent de réparation qui soit à proximité des éventuelles fissures et prêt à réagir lors d'une altération du matériau.

Dans le cas plus particulier des structures comprenant au moins une surface métallique protégée de la corrosion extérieure par une protection cathodique, il est proposé selon l'invention de développer plus particulièrement un ensemble comprenant un revêtement anti-corrosion desdites surfaces en milieu corrosif (eau, terre) qui soit également protecteur et auto-réparateur. Un usage typique d'un tel ensemble concerne par exemple la protection de canalisations placées dans l'eau de mer ou enterrées, pour le transport d'effluents.

Les conduites d'effluents et installations en acier peuvent être protégées par l'action conjointe d'un revêtement et d'une protection cathodique. Cette dernière consiste à placer la surface métallique à un potentiel électrique suffisamment bas, idéalement inférieur à -0,8 V et de préférence compris entre -0,8 V et -1,1 V/ (Ag/AgCl), de manière à minimiser la corrosion.

Par exemple, dans le cas particulier des canalisations en acier à usage pétrolier immergées en mer, celles-ci sont souvent protégées de la corrosion par la présence d'un revêtement d'une part et par la mise en place d'une protection cathodique d'autre part. Cette dernière consiste en l'application d'un potentiel plaçant artificiellement la surface métallique de la canalisation hors de son domaine de corrosion, la rendant ainsi moins corrodable qu'elle ne l'est initialement.

La protection cathodique peut être mise en oeuvre de deux manières différentes:

- soit par mise au contact de la structure avec un deuxième métal à un potentiel plus faible que celui du métal composant la structure, que l'on désigne alors généralement par le terme anode sacrificielle,
- soit par l'application d'un courant imposé qui rend impossible toute corrosion du métal composant la structure.

Selon le principe de la protection cathodique, lorsqu'on applique une protection cathodique, on défavorise la réaction d'oxydation du métal (équation [1]) composant la paroi (appelé métal dans la présente description), et on favorise la réduction de l'oxygène (équation [2]) et/ou la réduction des protons (équation [3]), voire à très bas potentiel la réduction de l'eau (équation [4]). En pratique, il est très difficile de contrôler le potentiel appliqué, ce qui conduit parfois à une surprotection cathodique lorsque le potentiel est trop négatif.

- Oxydation du métal (corrosion) :

$$M => M^{2+} + 2e^-\qquad[1]$$

- Réduction de l'oxygène :

$$O_2 + 2H_2O + 4e^- => 4\ OH^-\qquad[2]$$

- Réduction des protons :

$$2H^+ + e^- => H_2\qquad[3]$$

- Réduction de l'eau :

$$2H_2O + 2e^- => 2\ OH^- + H_2\qquad[4]$$

Si le revêtement présente un défaut comme des micro-fissures provoquées par exemple lors de l'application du revêtement, de la pose de la structure, du contact avec le fond marin ou le terrain ou par vieillissement du revêtement, les ions OH- vont se concentrer à l'interface revêtement/surface métallique au niveau du défaut. L'augmentation significative du pH dans cette zone a pour effet de provoquer une perte d'adhérence plus ou moins importante du revêtement et risque d'aboutir à plus ou moins brève échéance à son décollement.

D'un autre coté, la production d'hydrogène associée à la réduction des protons (équation [3]) ou, en cas de surprotection cathodique, à la réduction de l'eau (équation [4]) a pour résultat la réduction des oxydes métalliques présents sur la surface de la structure, ce phénomène entraînant une perte d'adhérence du revêtement sur le métal et un décollement de celui-ci. Dans les cas extrêmes, une forte concentration en hydrogène peut en outre provoquer la rupture de la structure métallique.

L'un des objectifs de l'invention est de former un film réparateur et protecteur à l'endroit de la structure où le métal est en contact direct avec le milieu corrosif, c'est-à-dire au niveau de la micro-fissure, de manière (i) à limiter la formation d'hydrogène et donc le risque de décollement du revêtement, voire de rupture de la structure, et (ii) à diminuer la demande en courant imposé ou la taille et/ou la vitesse de consommation de l'anode sacrificielle.

Selon l'invention, on utilise le gradient de milieu alcalin provoqué par la protection cathodique à l'endroit où le métal est en contact avec le milieu corrosif, pour conduire à la formation d'un dépôt réparateur de façon autonome, c'est-à-dire sans intervention extérieure, notamment dans le cas où une fissure se propage à travers le revêtement jusqu'au métal constitutif de la structure.

Selon l'invention, on utilise de façon avantageuse le champ électrique généré par la protection cathodique pour permettre la migration à l'endroit de la fissure des produits destinés à former le film réparateur sur la surface métallique de la structure.

Plus précisément, l'invention se rapporte à une structure comprenant au moins une surface métallique soumise à une protection cathodique et un revêtement protecteur de ladite surface, ledit revêtement comprenant un polymère incluant des micro-capsules contenant des composés sensibles au champ électrique généré par la protection cathodique et susceptibles de réagir en milieu alcalin pour former une couche protectrice sur la surface de la structure lorsque celle-ci est directement en contact avec un milieu corrosif.

En général, le polymère est choisi dans le groupe constitué par les polyoléfines, les polyesters saturés et insaturés, les résines alkydes, les résines acryliques, les résines phénoliques, les résines époxydiques et les polyuréthannes.

Par exemple, la structure est comprise dans le groupe constitué par les canalisations enterrées ou immergées, les réservoirs, les bateaux et les installations portuaires ou en mer.

Le plus souvent, le métal est choisi dans le groupe constitué par les aciers, le fer et les alliages métalliques du fer, le chrome et les alliages métalliques du chrome, les aciers inoxydables, les bases nickel et cuivre.

Selon un mode de réalisation possible, la mise en oeuvre de la protection cathodique sur la structure peut être assurée par un métal de potentiel inférieur au métal de la surface métallique protégée.

Selon un autre mode de réalisation possible, un courant est imposé sur la surface métallique pour la mise en oeuvre de la protection cathodique.

L'invention concerne également le revêtement tel que précédemment décrit.

Selon un premier exemple d'application, les composés compris dans les micro-capsules peuvent être des sels d'alcalin et/ou d'alcalino-terreux et/ou de métaux solubles dans l'eau de mer.

Par exemple, lesdits composés peuvent être des sels de zinc mélangés à des phosphonates et/ou des polyphosphates.

Selon un autre exemple d'application, lesdits composés peuvent être des agents de polymérisation coagulables à la paroi d'une surface soumise à un potentiel cathodique en milieu alcalin et réticulables à la température de ladite paroi.

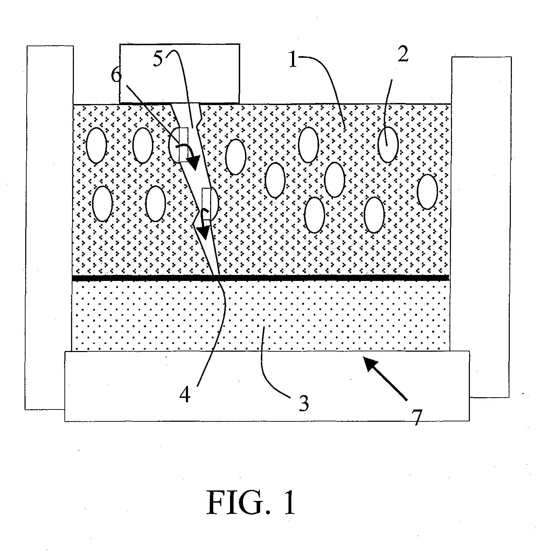

L'invention sera mieux comprise en référence à la figure 1 illustrant un mode de réalisation possible, uniquement fourni pour illustrer l'invention et ses avantages, mais qui doit être considéré comme non limitatif, quel que soit l'aspect considéré.

Selon la figure 1, une canalisation 7 selon l'invention et plongée dans l'eau de mer est schématisée en coupe. Elle comprend une conduite 3 faite d'un métal tel que l'acier qui est mise sous protection cathodique soit par courant imposé, soit sous l'effet d'une anode sacrificielle par exemple constituée de zinc métallique (non représentée sur la figure 1). L'anode sacrificielle est généralement constituée de pains ou d'anneaux régulièrement répartis sur la structure. Un revêtement 1 selon l'invention protège également la conduite 3 de l'eau de mer en l'enrobant dans son intégralité.

Le revêtement 1 est constitué par un polymère qui contient des micro-capsules 2 remplies d'un ou de plusieurs composés sensibles à un pH alcalin, par exemple tels que définis dans la suite de la description. Selon l'invention, lorsqu'une micro-fissure 5 se produit et se propage jusqu'à la surface de la conduite 3, les micro-capsules 2 se rompent et les composés emprisonnés sont libérés. Ceux-ci, sous l'effet du champ électrique généré par la protection cathodique, vont migrer vers le point de contact 4 entre l'eau de mer et la conduite. Durant l'étape suivante, lesdits composés réagissent en milieu alcalin pour former le dépôt protecteur sur la conduite 3, par exemple tel que décrit dans la suite de la description en relation avec les modes I et II.

Bien que l'invention n'y soit pas limitée, les deux modes de réalisation qui suivent permettent d'illustrer deux choix possibles pour lesdits composés :

Mode I : les composés utilisés sont des sels minéraux

Par exemple, une conduite telle que précédemment décrite est entourée d'un polymère protecteur, la protection cathodique étant assurée par un courant imposé. Des sels alcalins, alcalino-terreux ou métalliques hydrosolubles tels que les sels de magnésium et/ou de calcium sont encapsulés au sein du polymère, puis libérés lors de la rupture de la micro-capsule sous l'effet d'une contrainte imposée à la conduite et génératrice de micro-fissures dans le revêtement. On constate alors qu'un dépôt protecteur de $CaCO_3$ et/ou de $Mg(OH)_2$ forme un film étanche et protecteur permettant ainsi de limiter la demande en courant pour la protection cathodique.

Un film peut également être obtenu par libération de sels métalliques solubles comme des sels de zinc et par la précipitation sur la surface de la conduite d'hydroxyde de zinc dont la compacité peut en outre avantageusement être adaptée en présence de phosphonates et/ou de polyphosphates.

Mode II : les composés utilisés sont des agents de polymérisation

Ce mode de réalisation est particulièrement adapté pour les canalisations portées à une température chaude, c'est-à-dire typiquement supérieure à 50°C, telles que celles utilisées pour le transport de fluides chauds ou en sortie de compresseur.

Les agents de polymérisation sont généralement des monomères. Ceux-ci sont confinés dans le polymère protecteur de la conduite par encapsulation, puis, après libération, vont se déposer sur la surface de la canalisation au contact de l'eau de mer sous l'influence du pH alcalin et du champ électrique généré. Un tel processus peut en particulier s'appuyer sur ce qui est couramment fait en électrodéposition cathodique ou cataphorèse dont un exemple est donné dans le *Manuel de technologie des peintures et vernis*, Eurocol Editions : dans une première étape, les agents précurseurs de polymérisation sont rendus hydrosolubles et coagulables ; par exemple un monomère époxy est fonctionnalisé par réaction avec une amine secondaire conduisant à une amine tertiaire, puis, porté en milieu acide, à un ion ammonium fonctionnalisé soluble. Chargé positivement, l'ion ammonium fonctionnalisé est attiré par une surface soumise à un potentiel cathodique (pôle négatif) et migre sous l'effet du champ électrique. D'autre part, l'ion ammonium coagule à la paroi de la surface soumise à un potentiel cathodique par neutralisation avec les ions $OH^-$ formés à la cathode qui induit la réaction de déposition. Par la suite, la canalisation chaude, c'est-à-dire maintenue en température par le fluide qui la traverse, permet la réticulation des agents précurseurs fonctionnalisés coagulés, provoquant ainsi la cicatrisation de la micro-fissure.

Les micro-capsules utilisées selon la présente invention peuvent être de toutes natures et de toutes formes et dimensions connues et peuvent être synthétisées selon toute technique connue, par exemple selon les techniques décrites dans le brevet US-A-6 518 330 ou la demande de brevet US-A-2004/0007784.

Les structures selon l'invention peuvent être par exemple les canalisations enterrées ou immergées, les réservoirs, les bateaux et les installations portuaires ou en mer.

Les métaux constitutifs de la structure selon l'invention peuvent contenir ou être constituées d'acier, de fer et autres alliages métalliques tels que les alliages de fer, de chrome, les aciers inoxydables, les bases nickel, cuivre etc.

La protection cathodique est assurée selon l'invention par l'application d'un courant imposé ou par une anode sacrificielle comprenant ou constituée par des métaux le plus souvent compris dans le groupe constitué par le zinc, le magnésium ou l'aluminium.

Selon l'invention les composés contenus dans les micro-capsules sont choisis en fonction de leur sensibilité au champ électrique généré par la protection cathodique (une surface soumise à un potentiel cathodique est un pôle négatif), c'est-à-dire qu'ils vont migrer vers la surface de la structure métallique en contact avec le milieu corrosif sous l'effet dudit champ électrique et en fonction de leur réactivité en milieu alcalin pour former une couche protectrice sur la structure en contact avec le milieu corrosif.

**Revendications**

1. Structure comprenant au moins une surface métallique soumise à une protection cathodique et un revêtement protecteur de ladite surface, ledit revêtement comprenant un polymère incluant des microcapsules contenant des composés sensibles au champ électrique généré par la protection cathodique et susceptibles de réagir en milieu alcalin pour former une couche protectrice sur la surface de la structure lorsque celle-ci est directement en contact avec un milieu corrosif.

2. Structure selon la revendication 1 dans laquelle le polymère est choisi dans le groupe constitué par les polyoléfines, les polyesters saturés et insaturés, les résines alkydes, les résines acryliques, les résines phénoliques, les résines époxydiques et les polyuréthannes.

3. Structure selon la revendication 1 ou 2 dans laquelle ladite structure est comprise dans le groupe constitué par les canalisations enterrées ou immergées, les réservoirs, les bateaux et les installations portuaires ou en mer.

4. Structure selon l'une des revendications 1 à 3 dans laquelle le métal est choisi dans le groupe constitué par les aciers, le fer et les alliages métalliques du fer, le chrome et les alliages métalliques du chrome, les aciers inoxydables, les bases nickel et cuivre.

5. Structure selon l'une des revendications 1 à 4 comprenant un métal de potentiel inférieur au métal de la surface pour la mise en oeuvre de ladite protection cathodique.

6. Structure selon l'une des revendications 1 à 4 dans laquelle un courant est imposé sur la surface métallique pour la mise en oeuvre de la protection cathodique.

7. Revêtement selon l'une des revendications 1 à 6.

8. Revêtement selon la revendication 7 dans lequel lesdits composés sont des agents de polymérisation coagulables à la paroi d'une surface soumise à un potentiel cathodique en milieu alcalin et réticulables à la température de ladite paroi.

9. Revêtement selon la revendication 7 dans lequel lesdits composés sont des sels d'alcalin et/ou d'alcalino-terreux et/ou de métaux solubles dans l'eau de mer.

10. Revêtement selon la revendication 9 dans lequel lesdits composés sont des sels de zinc mélangés à des phosphonates et/ou des polyphosphates.

FIG. 1